# EUROPÄISCHE PATENTANMELDUNG

(11) **EP 2 165 754 A1**
(43) Veröffentlichungstag der Anmeldung: **24.03.2010**
(21) Anmeldenummer: 09160187.2
(22) Anmeldetag: 13.05.2009
(51) Int. Cl.: B01J 3/04

(54) **Autoklaven zur Herstelleung von Solargläsern sowie Anordnung mit solchen Autoklaven**

(30) Priorität: 13.05.2008 DE 102008023282
(71) Anmelder: Neuweiler AG, 8280 Kreuzlingen (CH)
(72) Erfinder: Neuweiler, Christian, 8585 Zuben (CH); Lindt, Mathias, 8280 Kreuzlingen (CH); Geissberger, Urs, 8405 Winterthur (CH)

(57) **Zusammenfassung**

Für die Herstellung von Solarmodulen bzw. -gläsern, bestehend aus einer auf Glas aufgedampften Siliziumschicht, einer dazwischen geschalteten Verbundfolie sowie einem weiteren Glas, ist ein Arbeitsprozess in einem Autoklaven notwendig. Aufgrund der handelsüblichen Dimension der Solarzellen, circa 1,00 m auf 1,30 m, können jedoch die aus dem Stand der Technik bekannten Autoklaven nicht optimal bestückt werden. Der Energiebedarf ist sehr hoch, so dass der Prozesszyklus pro Zelle sehr lang ist.

Es wird ein Autoklav (1) vorgeschlagen, insbesondere zur Herstellung von Solargläsern, der aus eine Grundkörper (2) und an den jeweiligen Stirnseiten (3) angeordneten Deckelelementen (4) besteht, wobei auf der Mantelfläche (M) des Grundkörpers (2) mindestens eine Tür (5) angeordnet ist und der Autoklav (1) im Gebrauch mit einer seiner Stirnseiten (3) auf einem Grundflächenelement (8) steht.

## Beschreibung

### Technisches Gebiet

Die Erfindung bezieht sich auf eine Vorrichtung zum Herstellen von Solarzellen, die von Verbundgläsern eingeschlossen sind, insbesondere in einem kontinuierlichen Prozess im Innenraum eines Autoklaven.

### Stand der Technik

Aus der EP 0693366 B (STEPHANE LERAY, PATRICK JANVIER) 15.06.1995 ist ein Verfahren zum Herstellen von Verbundglasscheiben bekannt, bei dem zwei vorbeschichtete Glasscheiben über eine dazwischen angeordnete Kunststofffolie in einem Autoklaven unter Druck und unter erhöhter Temperatur miteinander verbunden werden. Dabei wird mit einem Druck zwischen 8 und 14 bar und einer Temperatur zwischen 100 und 140 Grad Celsius gearbeitet. Bei dem Verbindungsprozess im Autoklaven wird die zunächst aus nachgiebigen Kunststoff bestehende Folie ausgehärtet und bildet dann eine starre, feste Verbindung der beiden Glasscheiben.

Gemäss der EP 0693366 B (STEPHANE LERAY, PATRICK JANVIER) 15.06.1995 wird an dem Umfang eines Verbunds einer Scheibenfolie ein Umfangband zum Abschluss und/oder Schutz der Kante der Verglasung aufgebracht. Für die Bereitstellung einer optimalen Verbindung wird dieser Verbund in einen Autoklaven gebracht und einem thermischen Prozess ausgesetzt.

In der Regel bestehen Autoklaven aus einer entsprechenden Kammer, einer Tür, die eine Öffnung zu der Kammer verschliesst und einer ringförmigen Dichtung, die sich um die Kammer zwischen der Kammer und der Tür erstreckt.

Autoklaven werden in der Regel dafür verwendet, um Gegenstände mit Dampf bei erhöhtem Druck und erhöhten Temperaturen zu behandeln, um etwa eine Sterilisation oder aber auch beispielsweise Herstellung von Verbundgläsern zu bewirken. Die Autoklavenkammer wird durch eine Tür geschlossen, durch die Gegenstände in der Kammer abgelegt und aus ihr entfernt werden können.

Die bekannten Autoklaven sind rohrförmig ausgebildet und weisen auf ihrer Stirnseite eine runde, grosse Öffnung auf, die mit einer schwenkbaren Tür verschlossen werden kann.

So sind beispielsweise aus der GB 1088953 A (ALFRED FREDERICK RAWLINGS) 23.05.1963 oder der US 4203947 A (JACK H. YOUNG, FRANK E. HALLECK) 02.02.1979 Autoklaven bekannt.

### Nachteile des Standes der Technik

Insbesondere die aus dem Stand der Technik bekannten Autoklaven sind in ihren Dimensionen sehr gross, insbesondere diejenigen, die zur Herstellung von Verbundgläsern geeignet sind. Sie müssen beispielsweise grosse Autoscheiben oder Busscheiben aufnehmen, die dann in einem langandauernden Prozess hergestellt werden können.

Daher ist zur Betreibung dieser Autoklaven ein sehr hoher Energiebedarf notwendig.

Bisher werden für die Herstellung von Solarmodulen, bestehend aus einer auf Glas aufgedampften Siliziumschicht, einer dazwischen geschalteten Verbundfolie sowie einem weiteren Glas, in diesem Autoklaven hergestellt. Aufgrund der handelsüblichen Dimension, circa 1,00 m auf 1,30 m, können jedoch die aus dem Stand der Technik bekannten Autoklaven nicht optimal bestückt werden. Der Energiebedarf ist sehr hoch, so dass der Prozesszyklus pro Zelle sehr lang ist.

### Aufgabe der Erfindung

Daher ist es Aufgabe der Erfindung, unmittelbar anschliessend an den Herstellungsprozess des Halbzeugs einer Solarzelle beziehungsweise eines Solarglases, die Herstellung des Verbundes, bestehend aus Glas mit aufgedampfter Siliziumschicht, Verbundfolie und wiederum Glas, unmittelbar herstellen zu können.

### Lösung der Aufgabe

Die Lösung der Aufgabe ist durch die Merkmale des Anspruchs 1 gegeben.

### Vorteile der Erfindung

Für die Herstellung solcher Solargläser sind Fertigungsprozesse notwendig, die kontinuierliche Bearbeitung erfordern. Dies bedeutet, dass in einem ersten Schritt nach Reinigung des entsprechenden Verbundglases, Silizium aufgedampft wird, entsprechende Kontakte hergestellt werden, in einem weiteren Prozess die Verbundfolie aufgelegt wird und dann mit einem weiteren Glas die Einheit zunächst verpresst. Dieses Halbzeug eines Solarglases ist dann geeignet, in einem Autoklaven fertiggestellt zu werden.

Erfindungsgemäss ist nun vorgesehen, einen Autoklaven bereitzustellen, der von einem Roboter bedienbar ist. Dies bedeutet, dass das Halbzeug unmittelbar aus der Fertigungsstrasse übernommen und in ein Rack bzw. Aufbewahrungsmittel aufgenommen werden kann, derart dieses in den Autoklaven eingeschoben werden kann. Hierzu ist der Autoklav derart ausgebildet, dass er sich senkrecht vom Boden weg röhrenartig erstreckt und im Gegensatz zum Stand der Technik nicht die Tür auf der Stirnseite, sondern auf der Mantelseite aufweist. Dadurch lässt sich der Ausschnitt der Tür derart bemessen, dass die Tür ein- oder zweiteilig ausgebildet ist und in den Innenraum des Autoklaven verschwenkbar ist. Dies kann vorzugsweise durch den Roboter ausgeführt werden.

Die Autoklaven umfassen in der Regel 60 bis 80 solcher in Standardmassen vorliegenden Solargläser. Der Prozess dauert in der Regel 90 Minuten, wobei sich der Prozess in drei Prozessabschnitte untergliedert, nämlich in den Prozess des Aufheizens, der kontinuierlichen Temperaturhaltung und des entsprechenden Abkühlprozesses. Die Drücke innerhalb der Prozesskammer des Autoklavens werden entsprechend diesem Temperaturverlauf angepasst.

Eine Stand-Alone-Lösung kann vorsehen, dass Heiz- und Kühlaggregate innerhalb des Autoklaven angeordnet sind.

Vorteilhafterweise sieht die Erfindung vor, dass eine bestimmte Konvektion des Luftstroms innerhalb des Autoklaven vorgesehen ist. Insbesondere ist vorgesehen, dass der Luftstrom (in der Aufheizphase und Warmhaltephase ein warmer Luftstrom) von einem im oberen Bereich des Autoklaven angeordneten Ventilators angesogen und zwangsgeführt zu Innenseite des Mantels gelenkt wird derart, dass der Luftstrom flächig und gleichmässig, vorzugsweise vergleichbar mit einem Diffusor, die zu bearbeitenden Solargläser durchfluten kann und zwar senkrecht zur Längserstreckung des Autoklavs. Auf der gegenüberliegenden Seite wird der Luftstrom aufgefangen und wiederum in den oberen Bereich des Autoklaven geführt. Für die Abkühlphase wird entweder gekühlte Luft eingeführt oder es befinden sich im Bereich des Mantels Kühlschlangen, die den Luftstrom herunterkühlen, bevor dieser die Solargläser überflutet.

Eine effiziente Energieversorgung mit einer zentralen Heiz- und Kühleinrichtung lässt es vorteilhafterweise zu, dass mehrere Autoklaven gleichzeitig mit ein und denselben Prozessen versorgt werden. Eine alternative Weiterbildung sieht vorteilhafterweise vor, dass die Energieversorgung derart ausgelegt ist, dass die Wärme des einen Autoklavens während der Abkühlphase zum Erwärmen des anderen Autoklaven genutzt werden kann. Dies gilt ebenso für die bereitgestellte Kälte.

Ein weiterer wesentlicher Vorteil der Erfindung ist es , dass ein Autoklav und eine Anordnung von Autoklaven bereitgestellt wird, der bzw. die idealerweise in einen Fertigungsprozess als "Backend" eingefügt werden kann. Es kann vollautomatisch eingesetzt werden, da eine automatische Öffnung der Tür sowie Beschickung und Endladung durch Roboter möglich ist und ein solcher Autoklav eignet sich insbesondere zur Herstellung von Solargläsern, da es die entsprechenden Dimensionen und technischen Ausgestaltungen aufweist und daher ein effizientes Energiemanagement möglich ist.

Weitere vorteilhafte Ausgestaltungen sind der nachfolgenden Beschreibung, den Zeichnungen sowie den Ansprüchen zu entnehmen.

### Zeichnungen

### Es zeigen:

- **Fig. 1**: eine perspektivische Ansicht auf einen erfindungsgemässen Autoklaven zur Herstellung von Solargläsern;
- **Fig. 2**: eine perspektivische Ansicht auf den Autoklaven gemäss Fig. 1, zusätzlich mit einer Darstellung der Innenanordnung;
- **Fig. 3**: einen Längsschnitt durch den Autoklaven gemäss Fig. 1;
- **Fig. 4**: einen Querschnitt durch den Autoklaven gemäss Fig. 1;
- **Fig. 5**: einen weiteren Längsschnitt durch den Autoklaven gemäss Fig. 1;
- **Fig. 6**: eine perspektivische Ansicht auf den Autoklaven gemäss Fig. 1 mit geöffneter Tür und einem Heizelement;
- **Fig. 7**: ein Diagramm zur Darstellung des Verlaufs der Temperatur über der Zeit während eines Bearbeitungsprozesses innerhalb des Autoklaven;
- **Fig. 8**: ein Diagramm zur Darstellung des Verlaufs des Drucks über der Zeit während eines Bearbeitungsprozesses innerhalb des Autoklaven;
- **Fig. 9**: eine erfindungsgemässe Anordnung von mehreren der in Fig. 1 dargestellten Autoklaven;
- **Fig. 10**: ein Schaltbild zur Darstellung einer effizienten Energieversorgung von mehreren Autoklaven.

### Beschreibung der Ausführungsbeispiele

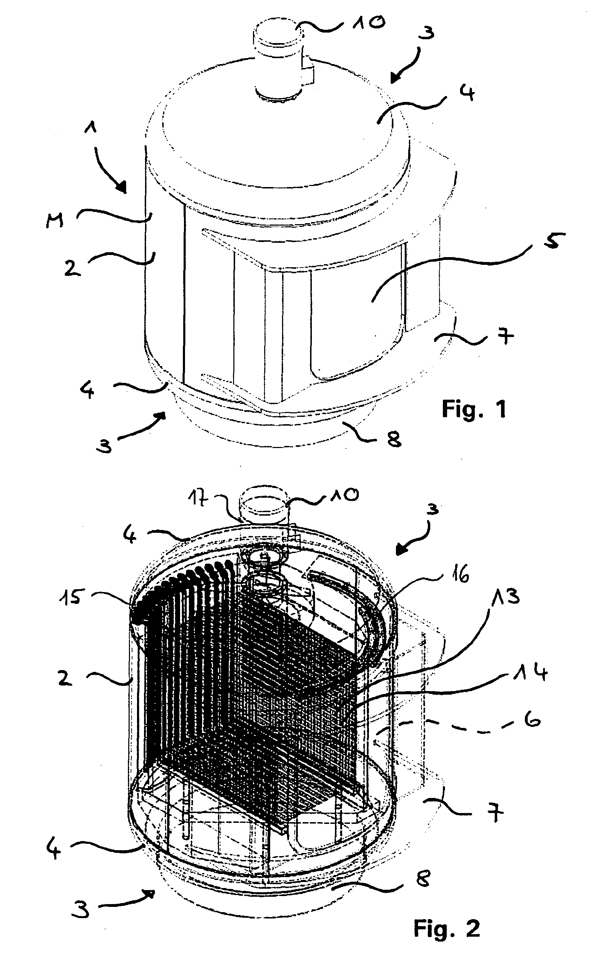

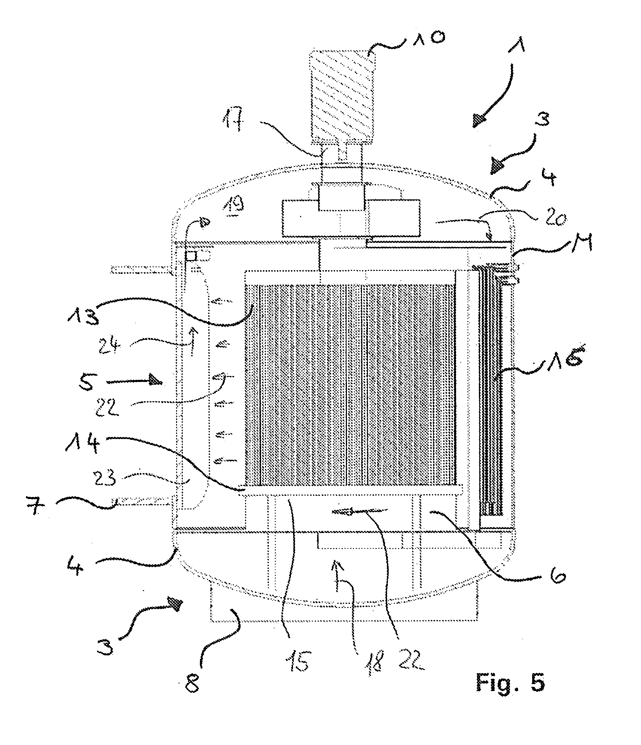

In den Figuren 1 bis 5 ist ein Autoklav 1 dargestellt. Er besteht aus einem zylinderförmigen Grundkörper 2, der auf seinen Stirnseiten 3 jeweils mit einem Deckelelement 4 fest verschlossen ist. Auf seiner Mantelfläche M weist der Autoklav 1 eine Tür 5 auf, die sich in den Innenraum 6 des Autoklaven 1 verschwenkt. Dadurch sind im Aussenbereich des Autoklaven 1 keine Kollisionsgegenstände vorhanden, die beispielsweise einem Roboter bei der Handhabung der zu bearbeitenden Ware im Wege stehen könnte.

Zur besseren Beladbarkeit des Autoklaven 1 ist zusätzlich um den Türbereich herum eine Rahmenkonstruktion 7 vorgesehen, damit ein zielgenaues Einfahren der zu bearbeitenden Waren möglich ist. Ferner stellt die Rahmenkonstruktion 7 eine Verstärkung in Bezug auf die Festigkeit des Autoklaven 1 dar.

Der Autoklav 1 selbst ist in seiner zylinderförmigen Ausgestaltung derart ausgebildet, dass er sich senkrecht von einem Grundflächenelement 8 wegerstreckt. Im Gegensatz zum Stand der Technik ist somit der Zugang des Autoklaven 1 nicht über eine Stirnseite 3, sondern über die Mantelseite M möglich. Dies bringt den erheblichen Vorteil mit sich, dass die aufzunehmenden Produkte innerhalb des Autoklaven 1 besser und effizienter gestapelt werden können. Die Tür 5 kann aufgrund eines Stellantriebs 10 auf Bedarf selbsttätig geöffnet werden.

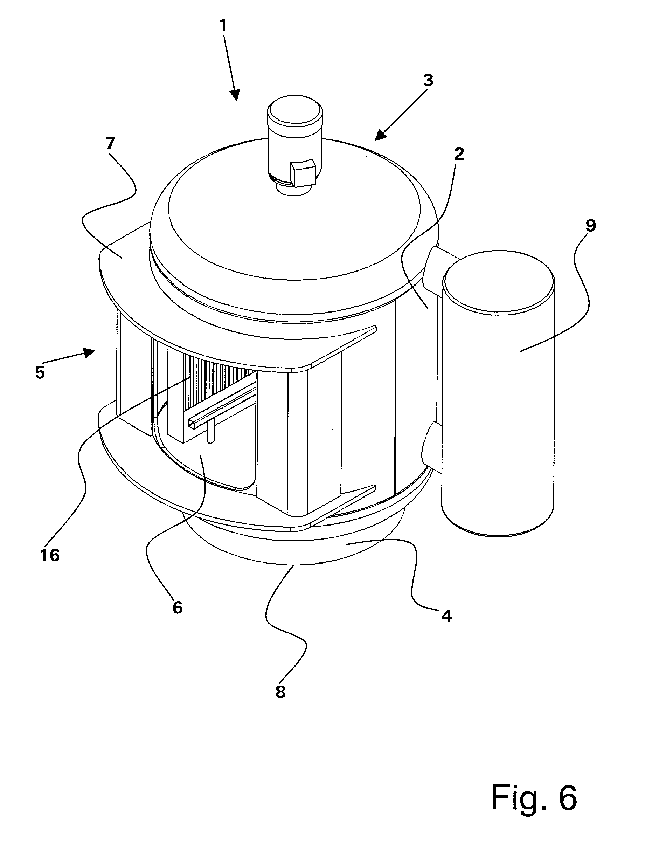

Zusätzlich ist, wie in einem Ausführungsbeispiel in Fig. 6 dargestellt, ein Heizelement 9 vorgesehen, dass das Aufheizen des Innenraumes 6 des Autoklaven 1 ermöglicht. Ferner ist innerhalb des Autoklaven 1 eine Ventilationseinrichtung (in der Zeichnung nicht näher dargestellt) vorgesehen, um dafür zu sorgen, dass die Temperatur im Innenraum 6 des Autoklaven 1 nahezu konstant ist.

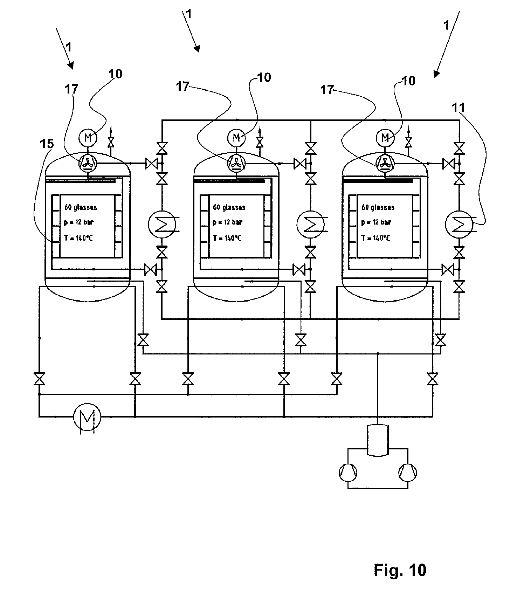

Für die Bearbeitung von Solargläsern 13 werden diese in einem Aufbewahrungsmittel 14 in den Innenraum 6 des Autoklaven 1 eingeschoben. Bei dem in den Fig. 1 bis 5 dargestellten Ausführungsbeispiel ist die Heiz- und Kühleinrichtung innerhalb des Autoklaven 1 angeordnet. Der Innenraum 6 verfügt somit über eine oder mehrere Heizschlangen 15 und über eine oder mehrere Kühlschlangen 16 , die für die entsprechende Innentemperatur sorgt und mit dem in Fig. 6 dargestellten Heizelement 9 oder mit den entsprechenden Aggregaten, wie sie in Fig. 10 dargestellt sind, gekoppelt sind.

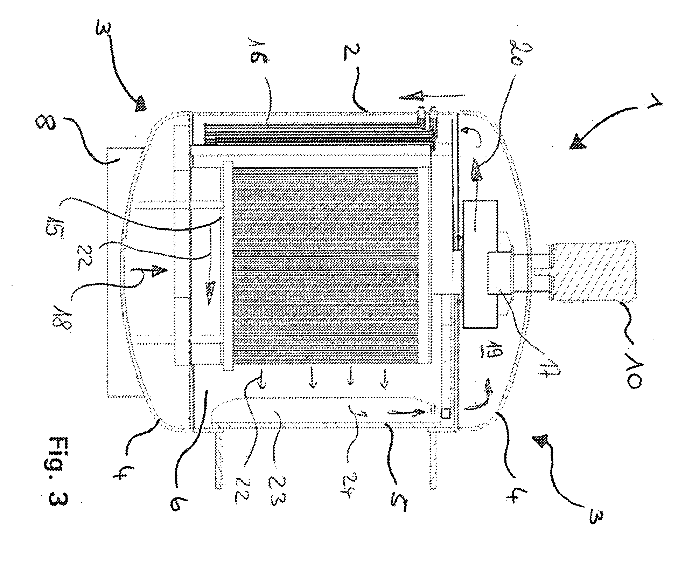

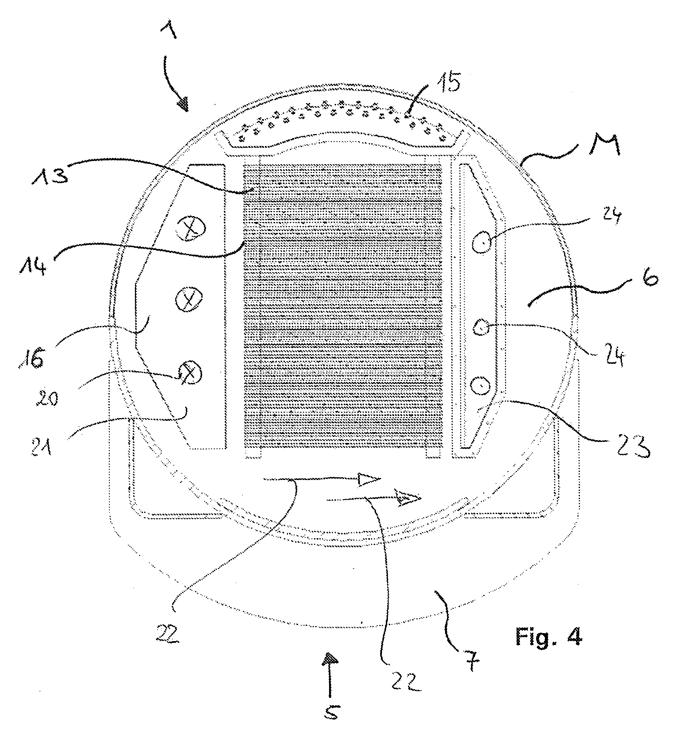

Durch die Heizschlangen 15 (exemplarisch dargestellt in den Fig. 3 und 4) wird Wärme (Aufwärm- und Heizphase) erzeugt, die von einem in den Zeichnungen nur schematisch dargestellten Ventilator 17 in Pfeilrichtung 18 gesogen wird. Die warme Luft gelangt in den oberen Bereich 19 des Autoklaven und wird von dort zur Innenseite des Mantels M des Autoklaven 1 in Pfeilrichtung 20 umgelenkt. Ein Diffusorelement 21 lenkt wiederum die Luft durch die im Produktionsprozess befindlichen Solargläser 13 in Pfeilrichtung 22. Ein auf der gegenüberliegenden Seite angeordnetes Sammelelement 23 sammelt die Luft und führt diese wieder zurück in den Aufheizbereich zu den Heizschlangen 15 und in den oberen Bereich 19. Somit werden die zu bearbeitenden Produkte (Solargläser (13)) gleichmässig und flächig senkrecht zur Längserstreckung des Grundkörpers (2) durchflutet.

Für den Kühl- bzw. Abkühlvorgang ist die Konvektion des Luftstroms identisch, jedoch mit dem Unterschied, dass die Heizschlangen 15 abgeschaltet sind und die Kühlschlangen 16 den Abkühlprozess durchführen.

In der Regel weisen die Autoklaven circa einen Durchmesser von 2000 mm auf und eine Höhe von circa 2500 mm.

Ein Verfahren zur Herstellung von Solargläsern setzt voraus, dass über die Verweildauer innerhalb eines Autoklavens das zu bearbeitende Produkt einem reproduzierbaren Temperatur- und Druckprozess ausgesetzt ist.

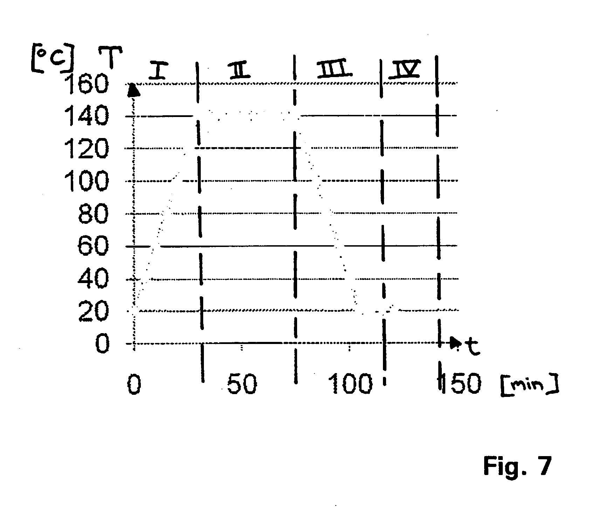

In Figur 7 ist der Verlauf der Temperatur über die Zeit während des Bearbeitungsprozesses gezeigt. Hieraus ist zu erkennen, dass sich die Bearbeitung eines Solarglases im Wesentlichen in drei Abschnitte unterteilt, nämlich Vorgang des Aufheizens (I), einem Konstanthalten einer bestimmten Temperatur, hier 140 Grad Celsius (II) und einem Abkühlprozess wieder zurück zur Raumtemperatur (III).

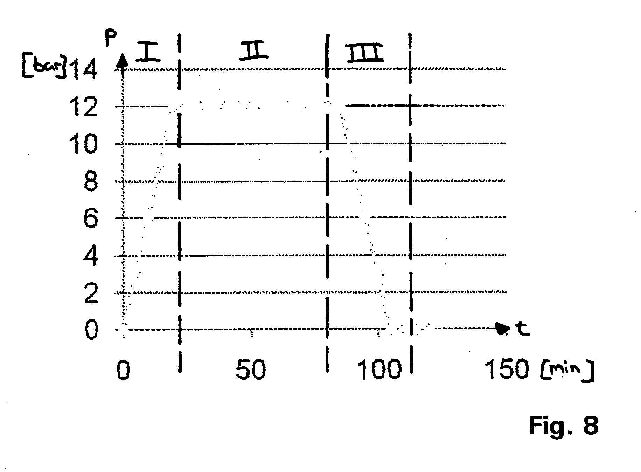

Parallel hierzu wird, wie in Figur 8 dargestellt, auch der Druck entsprechend geregelt. Während der Aufwärmphase steigt der Druck auf hier beispielsweise 12 bar an (II), wird über den entsprechenden Zeitraum bei gleicher Grösse beibehalten (Prozessabschnitt II) und wird dann wiederum über einen kurzen Zeitraum auf Umgebungsdruck abgesenkt (III).

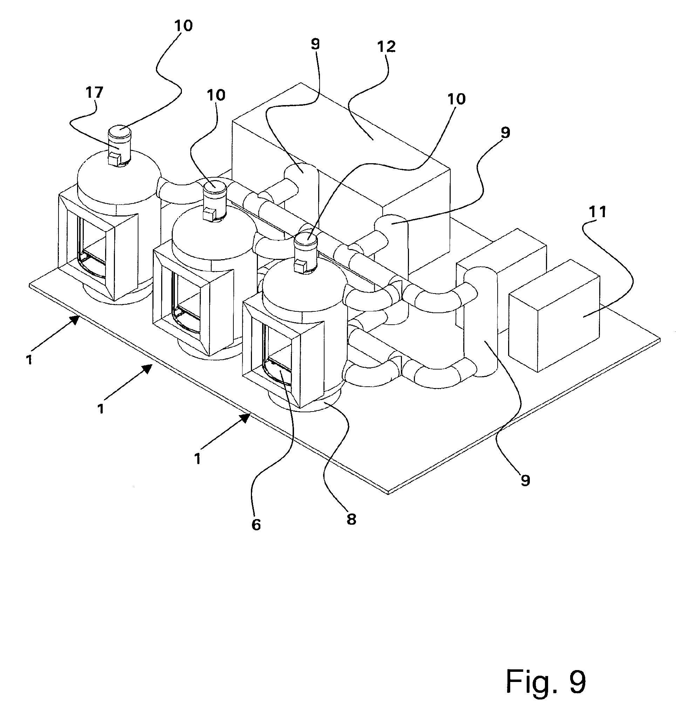

Vorzugsweise werden die erfindungsgemässen Autoklaven, so wie beispielsweise in den Figuren 1 bis 5 dargestellt sind, zur besseren Ausnutzung des gesamten Herstellungsprozesses mehrfach, insbesondere dreifach nebeneinander angeordnet (Fig. 9), wobei die Autoklaven 1 selbst untereinander entsprechend durch Einrichtungen, die die entsprechenden Fluidströme (Druck, Wärme und Kälte) leiten, gekoppelt sind. Dies bringt insbesondere die Möglichkeit mit sich, dass durch den Abkühlprozess des ersten Autoklaven 1 (Herunterkühlen) die verbliebene Wärme in den zweiten Autoklaven 1 eingeführt werden kann, wohingegen der dritte bereits voll aufgeheizt ist. Ein effizientes Energiemanagement ist möglich.

Eine in Fig. 10 dargestellte Schaltungsanordnung ist auf der Basis eines solchen Energiemanagements dargestellt . Zusätzliche elektrische Beheizung 11 ermöglichen die Bereitstellung und damit den Transport der entsprechenden Wärme. Dies gilt auch für die bereitgestellte Kälte (Kälteeinrichtungen 12). Sollte ein zentrales Heizelement 9 ausfallen, sind so weitere Heizvorrichtungen vorhanden, die als Fallbackposition dann hinzugeschaltet werden können. So wird vermieden, dass Prozesse unterbrochen werden und teure Solargläser dann möglicherweise nicht mehr verwendbar sind. Ein für die Prozesse notwendiges Kühlaggregat dient dazu, die entsprechenden Autoklaven 1 innerhalb der vorgegebenen Zeit, wie in Figur 7 und 8 dargestellt ist, herunter zu kühlen. In der Regel weisen jedoch Industrieunternehmen bereits Kältevorrichtungen auf, so dass diese einfach an die erfindungsgemässen Autoklaven anschliessbar sind.

Somit ist mit der Erfindung ein Autoklav 1 und eine Anordnung aus Autoklaven 1 bereitgestellt worden, das idealerweise in einen Fertigungsprozess als "Backend" eingefügt werden kann. Ein solcher Autoklav oder eine solche Anordnung kann überall dort eingesetzt werden, wenn es darauf ankommt, einen vollautomatischen Prozess durchzuführen (automatische Öffnung der Tür sowie Beschickung und Endladung durch Roboter). Ein Autoklav der zuvor beschriebenen Art eignet sich insbesondere zur Herstellung von Solargläsern, da es die entsprechenden Dimensionen und technischen Ausgestaltungen aufweist.

Es ist sehr effizient, da die einzelnen Autoklaven 1 in unterschiedlichen Prozessabschnitten betrieben werden, so dass die Energie des einen Autoklaven 1 durch den anderen weiteren Autoklaven 1 genutzt werden kann.

Auf diese Art und Weise ist die sehr effiziente und kostengünstige sowie energetisch gut ausgenutzte Herstellung von Solargläsern möglich.

## Patentansprüche

1. Autoklav, insbesondere zur Herstellung von Solargläsern, bestehend aus eine Grundkörper (2) und an den jeweiligen Stirnseiten (3) angeordneten Deckelelementen (4), wobei auf der Mantelfläche (M) des Grundkörpers (2) mindestens eine Tür (5) angeordnet ist und der Autoklav (1) im Gebrauch mit einer seiner Stirnseiten (3) auf einem Grundflächenelement (8) steht.

2. Autoklav nach Anspruch 1, **dadurch gekennzeichnet, dass** die Tür (5) selbsttätig zu öffnen ist.

3. Autoklav nach Anspruch 1 oder 2, **dadurch gekennzeichnet, dass** der Autoklav (1) über eine zentrale Heizeinrichtung versorgbar ist.

4. Autoklav nach Anspruch 1 oder 2, **dadurch gekennzeichnet, dass** der Autoklav (1) über eine zentrale Kühleinrichtung versorgbar ist.

5. Autoklav nach Anspruch 1 oder 2, **dadurch gekennzeichnet, dass** der Autoklav (1) über eine zentrale Druckeinrichtung versorgbar ist.

6. Autoklav nach Anspruch 2, **dadurch gekennzeichnet, dass** die Tür (5) sich zum Öffnen in den Innenraum (6) des Autoklaven (1) bewegt.

7. Autoklav nach mindestens einem der vorhergehenden Ansprüche, **dadurch gekennzeichnet, dass** im Innenraum (6) des Autoklaven (1) mindestens eine Heizschlange (15) zum Aufheizen des Innenraums (6) angeordnet ist.

8. Autoklav nach mindestens einem der vorhergehenden Ansprüche, **dadurch gekennzeichnet, dass** im Innenraum (6) des Autoklaven (1) mindestens eine Kühlschlange (16) zum Aufheizen des Innenraums (6) angeordnet ist.

9. Autoklav nach mindestens einem der vorhergehenden Ansprüche, **dadurch gekennzeichnet, dass** die Konvektion der Luft innerhalb des Autoklaven (1) zwangsgeführt ist, derart, dass die zu bearbeitenden Produkte (13) nahezu senkrecht zur Längserstreckung des Grundkörpers (2) geführt wird.

10. Anordnung von mindestens zwei Autoklaven gemäss Anspruch 1, **dadurch gekennzeichnet, dass** diese von einer zentralen Energieeinheit (Heizung, Kälte, Druck) versorgt werden, derart, dass die Energie aus den Abkühlprozessen des einen Autoklaven für den Aufheizvorgang des anderen Autoklaven verwendet wird.
